# EUROPEAN PATENT SPECIFICATION

(11) **EP 0 337 970 B1**
(45) Date of publication and mention of the grant of the patent: **15.02.1995**
(21) Application number: 89850110.1
(22) Date of filing: 06.04.1989
(51) Int. Cl.: B23B 27/16

(54) **Cutting tool employing a double pin retention assembly**
Schneidewerkzeug mit Doppelspannstiftanordnung
Outil de coupe employant un ensemble de deux goupilles de serrage

(30) Priority: 11.04.1988 US 180242
(43) Date of publication of application: 18.10.1989
(73) Proprietor: SECO TOOLS AB, S-773 01 Fagersta (SE)
(72) Inventor: Kelm, Walter Harold, Mt. Clemens, MI 48043 (US); Haque, Sazzadul, Troy, MI 48084 (US); Floyd, Thomas O., Sterling Heights, MI 48078 (US); Savas, Nick, Dearborn, MI 48124 (US)
(74) Representative: Eriksson, Kjell

(56) References cited:
- EP-A- 0 051 775
- EP-A- 0 247 011
- EP-A- 0 269 918
- CH-A- 508 438
- DE-B- 1 204 499
- US-A- 3 341 923

## Description

The present invention is directed to a cutting tool comprising a cutting insert having a first axial hole, a cutter body comprising a recess at one end including a base and at least one shoulder connected to the base for supporting the cutting insert, and a second axial hole alignable with the first axial hole and extending from the recess into at least a portion of the cutter body, said second axial hole comprising an upper portion and a lower portion containing an engaging means portion, said upper portion comprising an inwardly tapered wall extending from the recess thereby forming a conical-shaped section having a longitudinal axis offset from the axis of the engaging means portion, said engaging means portion comprising a plurality of grooves, and the bottom end of a primary retention pin comprising a plurality of corresponding threads, wherein the pitch diameter of said threads is different than the pitch diameter of said grooves, said primary retention pin further comprising an inwardly tapered side surface, and a surface at the top of said tapered side surface, a portion of said surface adapted to engage the inwardly tapered wall of the upper portion of the second axial hole for reversibly engaging therein said primary retention pin at an angle with respect to the axis of the engaging means containing portion of the second axial hole in the direction toward the shoulder of the recess, said primary retention pin adapted to be reversibly locked in the second axial hole of the cutter body at said angle.

Such cutting tools are known from US-A-3 341 920.

### Background of the invention

Cutting tools having a pin-type retaining means are known in the art. For example, Kelm, US-A-3.341.920 and US-A-3.341.923 disclose pin-type retaining means insertable into an axial hole of the cutting tool, wherein when the pin is driven axially into the hole, the pin forces the cutting insert radially against the supporting shoulder of the tool body to thereby lock the cutting insert in place.

As the threads of the pin engage the corresponding grooves of the tool body, contact is made between the central tapered portion of the pin and the corresponding tapered portion of the axial hole in the tool body. As a result, the pin is forced laterally toward the shoulder of the recess against which the cutting insert rests providing a firm lock of the cutting insert against the shoulder.

More specifically as shown in Figures 2 and 3 of US-A-3.341.920, the portion of the axial hole adjacent the base of the recess is tapered inwardly from the base of the recess to form a conical portion having a central axis identified by the line A-A. The remaining threaded portion of the axial hole in the recess of the tool body is cylindrical and has a central axis B-B offset from the axis A-A of the conical portion of the hole. The axis A-A is offset from the axis B-B in the direction toward the supporting shoulder of the shank. As a result, a significant force is applied against the cutting insert by the pin to thereby lock the same against the supporting shoulder.

Such retention pins also have an axial hole in the bottom threaded portion of the pin extending upward toward the tapered section of the pin. The axial hole has grooves which mate with a drive means such as a hex wrench to provide a greater locking force at the bottom of the pin.

These prior art devices are particularly suited for so-called lay-down type cutting inserts. However, such devices do not satisfactorily inhibit movement during cutting operations when on-edge cutting inserts are employed. This is because the retention force generated by the pin is directed primarily radially in the direction of the shoulder of the recess and the only axial force is that due to the friction engagement of the cutting insert against the locking shoulders. The cutting forces generated in the axial direction of the locking pin may exceed the frictional force thereby resulting in movement of the cutting insert which can lead to tool failure.

To overcome the problems with on-edge type of cutting inserts, tool clamps have been used which apply a clamping force against the top surface of the cutting insert substantially perpendicular to the cutting edge to maintain the same in the locked position. The clamp is used in conjunction with pin-type retaining means described previously to provide a locking force exceeding that of the frictional force.

The use of a clamp in conjunction with pin-type retaining means has three primary disadvantages. First, the clamp is bulky and can prevent or inhibit access to certain workpieces and therefore, cannot be used in some machining operations.

Second, additional time and effort must be expended to lock and unlock the clamp and the cutting insert. A third disadvantage is that the clamp and those tools which are used to lock and unlock the clamp add significantly to the cost of the cutting tool. These disadvantages have made the use of clamps with pin-type retaining means of limited value for on-edge cutting tools.

The present invention overcomes the disadvantages of the aforementioned prior pin-type retaining means by a cutting tool having the features of claim 1. Such a cutting tool employs a double pin retention assembly which provides a locking force not only radially towards the supporting shoulder but also axially to provide an axial locking force which greatly exceeds the frictional force between the cutting insert and the recess. Furthermore, the double pin retention assembly of the present invention eliminates the need for cumbersome and expensive tool clamps.

It is therefore an object of the present invention to provide a cutting tool having a double pin-type retaining means which provides both a radial and axial locking force to more securely retain the cutting insert in the pocket of the cutting tool.

It is a further object of the invention to provide a cutting tool having a double pin-type retaining means especially suited for locking an on-edge cutting insert so that movement during cutting operations is substantially eliminated and tool failure is significantly reduced.

### SUMMARY OF THE INVENTION

In general, the cutting tool embodying the present invention comprises a tool body having a recess including a base and at least one shoulder for supporting a cutting insert.

The cutting insert has a first axial hole which is alignable with a second axial hole opening into the base of the recess and extending at least through a portion of the tool body. At least a portion of the second axial hole comprises means for releasably engaging a primary retention pin therein which has a third axial hole therein for receiving a secondary retention pin.

The second axial hole has an upper portion having a longitudinal axis which is offset from the axis of that portion of the second axial hole containing the means for releasably engaging the primary retention pin.

The primary retention pin is insertable into the second axial hole and secured therein by the engaging means. The primary retention pin is adapted to move from a first position wherein the longitudinal axis is substantially parallel to the engaging means to a second position where the longitudinal axis of the primary retention pin is tilted in the direction toward the shoulder of the recess.

The secondary retention pin has a neck section which is adapted to exert pressure contact against the wall forming the first axial hole of the cutting insert. The body of the secondary retention pin is secured within the third axial hole of the primary retention pin.

In operation, the primary retention pin is driven into the second axial hole until it is secured by the engaging means therein. As the primary retention pin is driven deeper into the second axial hole it is forced to tilt in the direction of the shoulder of the recess. The cutting insert is then placed on the recess with the first axial hole aligned with the second axial hole. The secondary retention pin is then inserted through the first axial hole of the cutting insert and into the third axial hole of the primary retention pin along the same tilted axis of the primary retention pin.

As the secondary retention pin is driven into the primary retention pin it exerts a locking force against the cutting insert both radially in the direction of the shoulder of the recess and axially in the direction of the base of the recess. This is due to the same angled position of the secondary retention pin within the primary retention pin which results from the axis of the primary retention pin being tilted upon insertion into the second axial hole of the tool body.

As a result, the double retention pin assembly of the present invention provides a significant radial and axial locking force against the cutting insert. The axial locking force greatly exceeds the axial frictional force associated with previous retention pin assemblies. The double retention pin assembly is therefore able to withstand both the radial and axial cutting forces generated during machining operations to substantially reduce movement of the cutting insert during machining operations.

### BRIEF DESCRIPTION OF THE DRAWINGS

The following drawings in which like reference characters indicate like parts illustrate embodiments of the invention and are not intended to limit the invention as encomposed by the claims of the application.
FIGURE 1 is a perspective view of an on-edge type cutting tool embodying the present invention;
FIGURE 2 is an expanded cross-sectional view taken along line 2-2 of FIGURE 1 showing the axial hole in the cutter body;
FIGURE 3 is an enlarged, exploded view of an embodiment of a primary and secondary retention pin employed in an embodiment of the present invention;
FIGURE 4 is a cross-sectional view similar to FIGURE 2 showing the primary retention pin in the first position within the axial hole of the cutter body;
FIGURE 5 is a cross-sectional view similar to FIGURE 2 showing the primary and secondary retention pins in the operable position for locking the cutting insert in the recess of the cutting tool;
FIGURE 6 is a perspective view of another embodiment of the cutting tool of the present invention employing an insert seat for supporting the cutting insert; and
FIGURE 7 is a cross-sectional view taken along line 7-7 of FIGURE 6 showing the primary and secondary retention pins in the operable position for locking the cutting insert against the insert seat in the recess of the cutting tool.

### DETAILED DESCRIPTION OF THE INVENTION

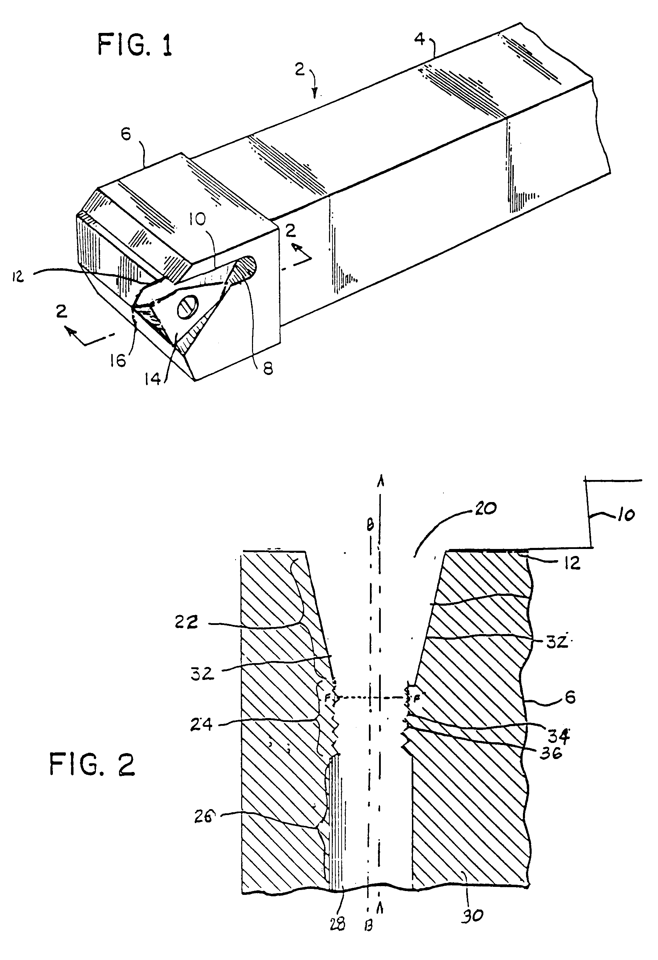

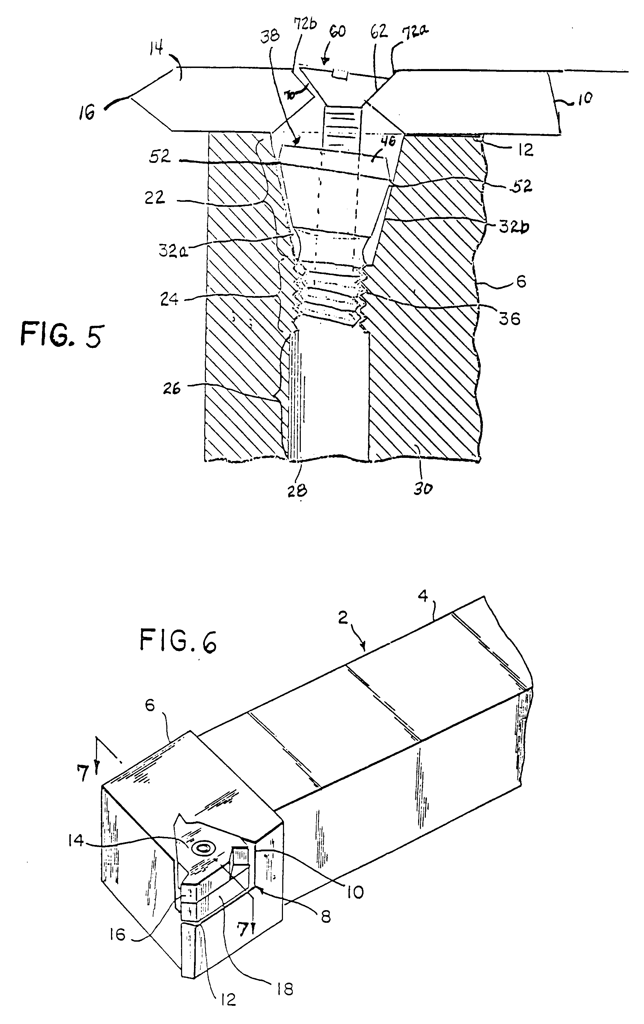

Referring to the drawings and particularly to FIGURES 1 and 6, a cutting tool 2 embodying the present invention includes a shank 4 which is inserted into a suitable cutting machine (not shown). At the upper end of the shank 4 is a cutter body 6 having therein a recess 8 formed by at least one shoulder 10 and a base 12 to provide support for a cutting insert 14 having at least one cutting edge 16. The cutting insert 14 may have a triangular shape as shown in FIGURE 1 or any other customary shape such as a square, rectangle, diamond, etc.

The cutting tool 2 shown in FIGURE 1 is an on-edge type cutting tool wherein the cutting insert rests on its end. A lay-down type cutting tool is shown in FIGURE 6. In this embodiment an insert seat 18 is positioned between the cutting insert 14 and the base 12 of the recess 8 as described in detail hereinafter.

As shown in FIGURE 2, the cutter body 6 has an axial hole 20 which extends at least through a portion of the cutter body 6. The axial hole 20 has an upper portion 22, an engaging means containing portion 24, and, optionally, a lower portion 26 which has an opening 28 exiting the bottom portion 30 of the cutter body 6.

The upper portion 22 of the axial hole 20 has an inwardly tapered side 32 extending from the base 12 of the recess 8 to the engaging means portion 24 of the axial hole 20. The engaging means portion 24 has a substantially cylindrical cross-section defined by a wall 34 having grooves 36 on the surface thereof.

The longitudinal axis A-A of the upper portion 22 is offset from the longitudinal axis B-B of the engaging means portion 24 in the direction of the shoulder 10 of the recess 8.

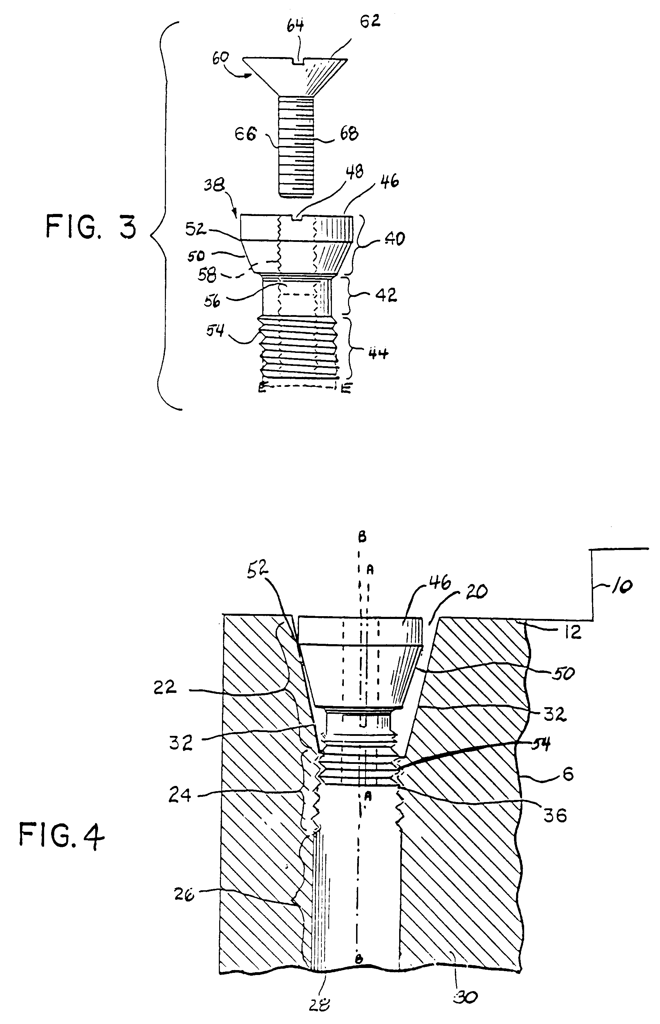

As shown in FIGURE 3, a primary retention pin 38 for use in cutting tools of the present invention includes an upper section 40, a midsection 42 and an externally threaded lower section 44. The upper section 40 includes a substantially cylindrical head 46 having a notch 48 which is engaged by a drive means (not shown) such as a screwdriver when the primary retention pin 38 is driven into the axial hole 20 of the cutter body 6.

The upper section 40 also comprises a tapered wall 50 which meets the cylindrical head 46 at a surface 52. The surface 52 presses against the tapered wall 32 of the axial hole 20 when the primary retention pin 38 is driven into the cutter body 6 as described hereinafter.

The lower section 44 of the primary retention pin 38 has a series of threads 54 which engage the corresponding grooves 36 in the engaging means portion 24 of the axial hole 20 for securely anchoring the lower section 44 of the primary retention pin 38 in the axial hole 20 of the cutter body 6.

Running centrally through the length of the primary retention pin 38 is an axial hole 56 having grooves 58 on the surface thereof for engaging corresponding threads of a secondary retention pin 60 when the secondary retention pin 60 is driven into the primary retention pin 38.

As shown in FIGURE 3, the secondary retention pin 60 includes a tapered head 62 having a notch 64 which is engageable by a suitable drive means such as a screwdriver to drive the secondary retention pin 60 into locking engagement within the axial hole 56 of the primary retention pin 38. The tapered head 62 rests within the V-shaped groove formed by the tapered wall of the cutting insert 14 and presses against the tapered wall when the secondary retention pin 60 is driven into the primary retention pin 38.

The secondary retention pin 60 also has a substantially cylindrical body 66 having external threads 68 thereon which mate with the grooves 58 on the surface of the axial hole 56 within the primary retention pin 38. When the secondary retention pin 60 is driven into the axial hole 56 of the primary retention pin 38, the threads 68 engage the grooves 58 to securely lock the secondary retention pin 60 within the primary retention pin 38.

Referring to FIGURE 4, when the primary retention pin 38 is initially driven into the axial hole 20, the threads 54 of the lower section 44 engage the corresponding grooves 36 in the engaging means portion 24 of the axial hole 20. Because the longitudinal axis A-A of the upper portion 22 is offset from the axis B-B of the engaging means portion 24 in the direction of the shoulder 10 of the recess 8, the surface 52 of the primary retention pin 38 abuts against the tapered side 32 of the upper portion 22 of the axial hole 20.

The grooves 54 of the primary retention pin 38 are provided with a pitch diameter which is different than the pitch diameter of the corresponding grooves 36 in the engaging means portion 24 of the axial hole 20. As a result, when the primary retention pin 38 is initially inserted into the axial 20, there is a loose fitting relationship between the primary retention pin 38 and the engaging means portion 24 which enables the primary retention pin 38 to tilt or cock in the direction of the shoulder 10.

More specifically, as shown in FIGURE 5, as the primary retention pin 38 is driven further into the axial hole 20, the resistance by the tapered side portion 32a against the surface 52 creates a force against the primary retention pin 38 in the direction of the shoulder 10. The primary retention pin 38 is able to relieve this force by tilting in the same direction until the surface 52 is prevented from further tilting when it abuts against the tapered side portion 32b. As a result,the primary retention pin 38 is angled with respect to the longitudinal axis B-B of the engaging means portion 24.

Tilting by the primary retention pin 38 is facilitated by the loose fitting relationship between the threads 54 of the primary retention pin 38 and the corresponding grooves 36 in the axial hole 20 which is established by employing different pitch diameters. The pitch diameter of the threads 54 of the primary retention pin 38 is shown by line E-E in FIGURE 3 and the pitch diameter of the grooves 36 is shown by line F-F in FIGURE 2. A detailed discussion of pitch diameters is set forth in Kelm US-A-3,341,920.

Once the primary retention pin is in the tilted position shown in FIGURE 5, the cutting insert 14 may be secured within the recess 8 in the following manner. The secondary retention pin 60 is placed through an axial hole 70 in the cutting insert 14. The axial hole 70 has a longitudinal axis coincident with the axis B-B of the engaging means portion 24 of the axial hole 20 of the cutter body 6. The axial hole 70 is formed by inwardly tapered walls 72a and 72b to provide a V-shaped groove for receiving the tapered head section 62 of the primary retention pin 60. As shown in FIGURE 5, the axial hole 70 may be comprised of a pair of mirror image V-shaped grooves. The tapered walls 72a and 72b serve as a seat for the secondary retention pin 60. If the cutting insert 14 is provided with the mirror image V-shaped grooves, the cutting insert 14 may be inverted to provide a new cutting edge 16.

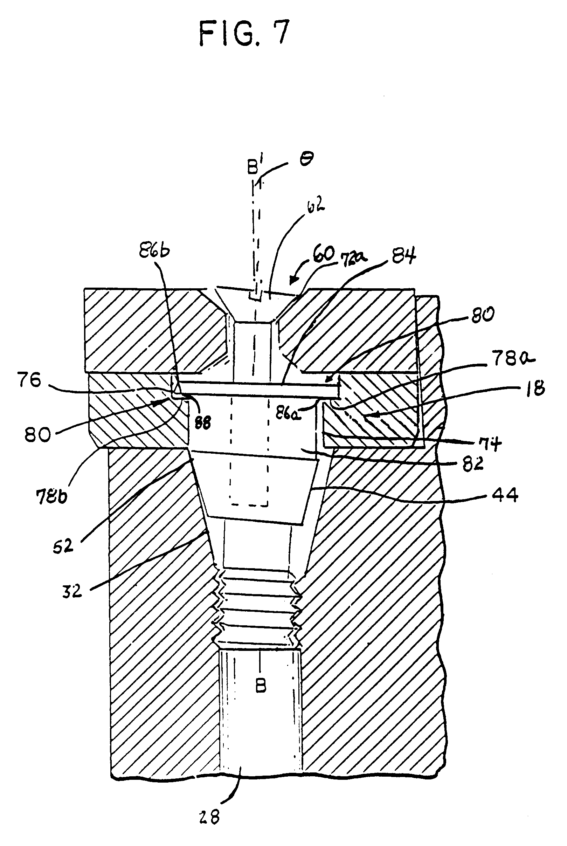

The secondary retention pin 60 is driven by a suitable drive means into the axial hole 56 of the primary retention pin 38 whereby the threads 68 engage the grooves 58 to provide a secure fit. Due to the tilt of the primary retention pin 38, the secondary retention pin 60 is likewise tilted at the same angle (see FIGURE 7) with respect to the axis B-B. This causes the tapered head 62 of the secondary retention pin 60 to exert both a radial and axial force against the tapered wall 72a of the cutting insert axial hole 70 forcing the cutting insert 14 radially toward the shoulder 10 and axially toward the base 12.

The angle of tilt for the secondary retention pin 60 and the primary retention pin 38 necessary to accomplish the above-described radial and axial locking force can vary over a wide range of up to about 45°, preferably in the range of about 1/2° to 15°.

In lay-down type tool holders of the present invention as shown in FIGURES 6 and 7, there is provided an insert seat 18 having an axial hole 74 therethrough and a counterbore 76 having opposed surfaces 78a and 78b.

The primary retention pin 38 is provided with an insert seat engaging section 80 which comprises a base 82, and an outwardly extending flange 84 having opposed bottom surfaces 86a and 86b. The locking of the cutting insert 14 in a lay-down type cutting tool is accomplished in the same way as previously described for the on-edge cutting tool.

When the primary retention pin 38 is driven into the engaging means portion 24, the bottom surface 86a of the flange 84 is caused to tilt downwardly and thereby press against the supporting surface 78a of the counterbore 76. This is shown in FIGURE 7 by a gap 88 which develops between the raised bottom surface 86b of the flange 84 and the corresponding surface 78b of the counterbore 76.

The pressure exerted against the insert seat 18 is directed radially toward the shoulder 10 and axially against the base 12 of the recess 8 to thereby securely lock the insert seat against the recess 8. It will be noted that the surface 52 of the upper portion 22 of the primary retention pin 38 remains in contact with only a portion of the tapered wall 32 of the axial hole 20 because further tilting of the primary retention pin 38 is prevented by the pressure engagement of the bottom surface 86a and 86b of the flange 84 on the support surface 78a of the counterbore 76.

The secondary retention pin 60 is then driven into the axial hole 56 of the primary retention pin 38 in the manner previously described so that the tapered head 62 exerts pressure contact against the tapered wall 72a of the cutting insert 14 both radially and axially to thereby lock the cutting insert 14 against the shoulder 10 of the recess 8 and the insert seat 18.

In order to remove the cutting insert 14 from its secured position, the foregoing procedures are followed in reverse order. Specifically, the secondary retention pin 60 is removed and the cutting insert 14 is turned over or rotated to employ a new cutting edge 16 or discarded. The primary retention pin 38 may be removed (as well as the insert seat 18 if one is employed) or left in the cutter body 6 as desired when indexing a cutting insert 14. It is also possible to disengage the primary retention pin 38 from the axial hole 20 by inserting a suitable drive means through the opening 28 in the bottom portion 30 of the cutter body 6. In this event, the bottom end of the primary retention pin 38 is provided with a notch or hex hole for receiving the drive means.

## Claims

1. A cutting tool comprising a cutting insert (14) having a first axial hole (70), a cutter body (6) comprising a recess (8) at one end including a base (12) and at least one shoulder (10) connected to the base (12) for supporting the cutting insert (14), and a second axial hole (20) alignable with the first axial hole (70) and extending from the recess (8) into at least a portion of the cutter body (6), said second axial hole (20) comprising an upper portion (22) and a lower portion containing an engaging means portion (24), said upper portion (22) comprising an inwardly tapered wall (32) extending from the recess (8) thereby forming a conical-shaped section having a longitudinal axis (A-A) offset from the axis (B-B) of the engaging means portion (24), said engaging means portion (24) comprising a plurality of grooves (36), and the bottom end of a primary retention pin (38) comprising a plurality of corresponding threads (54), wherein the pitch diameter of said threads (54) is different than the pitch diameter of said grooves (36), said primary retention pin (38) further comprising an inwardly tapered side surface (50), and a surface (52) at the top of said tapered side surface (50), a portion of said surface (52) adapted to engage the inwardly tapered wall (32) of the upper portion of the second axial hole (20) for reversibly engaging therein said primary retention pin (38) at an angle with respect to the axis (B-B) of the engaging means containing portion (24) of the second axial hole (20) in the direction toward the shoulder (10) of the recess (8), said primary retention pin (38) adapted to be reversibly locked in the second axial hole (20) of the cutter body (6) at said angle,
**characterized** in that said primary retention pin (38) comprises a third axial hole (56) extending through at least a portion of said primary retention pin (38) and means in said third axial hole (56) for reversibly locking a secondary retention pin (60) therein, said secondary retention pin (60) adapted to be inserted through the first axial hole (70) of the cutting insert (14) and into the third axial hole (56) in the primary retention pin (38) and comprising means (58) in conjunction with the third axial hole (56) for reversibly locking the secondary retention pin (60) therein and means (62) for exerting pressure against the cutting insert (14) in the direction of the recess (8) and the shoulder (10) of the recess (8).

2. Cutting tool according to claim 1,
**characterized** in that the primary retention pin (38) is movable from a first position wherein the longitudinal axis of the primary retention pin (38) is substantially parallel to the axis (B-B) of the engaging means containing portion (24) of the second axial hole (20), to a second position wherein said longitudinal axis is angled with respect to the axis (B-B) of the engaging means containing portion (24) of the second axial hole (20) in the direction of the shoulder (10) of the recess (8).

3. Cutting tool according to claim 1 or 2,
**characterized** in that when said primary retention pin (38) is in the first position the surface (52), at the top of the side surface (50), is in engagement with a surface of the inwardly tapered wall (32) remote from the shoulder (10) and when said primary retention pin (38) is moved to the second position the surface (52) is in engagement with the inwardly tapered wall (32) at two diametrically located areas.

4. Cutting tool according to any of the previous claims,
**characterized** in that the threaded bottom end (44) of the primary retention pin (38) comprises drive means engaging means, the second axial hole (20) having a bottom end (28) for receiving the drive means, wherein the drive means is inserted into the bottom end of the secondal pin (38) to thereby secure the primary retention pin (38) within the second axial hole (20).

5. Cutting tool according to any of the previous claims,
**characterized** in that the first axial hole (70) comprises at least one V-shaped groove and the secondary retention pin (60) comprises a tapered head section (62), said tapered head section (62) being in pressure contact with a portion of the V-shaped grooves of the cutting insert (14) nearest a shoulder (10) of the recess (8) when the secondary retention pin (60) is in locking engagement within the primary retention pin (38).

6. Cutting tool according to any of the previous claims,
**characterized** in that the secondary retention pin (60) comprises a substantially cylindrical body (66) having threads (68) on at least a portion of the exterior surface thereof and the third axial hole (56) having a shape complimentary to the shape of the cylindrical body (66) of the secondary retention pin (60), wherein the threads (68) of the secondary retention pin (60) are adapted to be in locking engagement with the gooves (58) in the third axial hole (56) when the secondary retention pin (60) is driven into the third axial hole (56).

7. Cutting tool according to any of the previous claims,
**characterized** in that an insert seat (18) for supporting the cutting insert (14) and positioned on the base (12) of the recess (8), said insert seat (18) having a fourth axial hole (74) alignable with the first (70) and second (20) axial holes and a counterbore (76) including a ledge at the top end of the fourth axial hole (74), said primary retention pin (38) having a flange (84) in the upper portion thereof adapted to engage a portion (78a) of the ledge in the direction of the shoulder (10) when the primary retention pin (38) is in locking engagement within the second axial hole (20).

## Patentansprüche

1. Schneidwerkzeug, welches einen Schneideinsatz (14) aufweist, mit einem ersten axialen Loch (70), einem Fräskörper (6) mit einer Ausnehmung (8) an einem Ende, welche eine Basis (12) und mindestens eine Schulter (10) aufweist, die mit der Basis (12) zum Stützen des Schneideinsatzes (14) verbunden ist, und einem zweiten axialen Loch (20), welches mit dem ersten axialen Loch (70) ausrichtbar ist und sich von der Ausnehmung (8) in mindestens einen Teil des Fräskörpers (6) erstreckt, wobei das zweite axiale Loch (20) einen oberen Teil (22) und einen unteren Teil aufweist, welcher einen Teil (24) mit Eingriffmitteln enthält, wobei der obere Teil (22) eine schräg nach innen zulaufende Wand 32 aufweist, die sich von der Ausnehmung (8) erstreckt, wobei sie einen konisch geformten Abschnitt bildet, welcher eine Längsachse (A-A) hat, die von der Achse (B-B) des Teils (24) mit den Eingriffmitteln versetzt ist, wobei der Teil (24) mit den Eingriffmitteln eine Vielzahl von Nuten (36) aufweist und das Bodenende eines primären Haltestiftes (38) eine Vielzahl von entsprechenden Gewinden (54) aufweist, wobei der Steigungsdurchmesser der Gewinde (54) sich von dem Steigungsdurchmesser der Nuten (36) unterscheidet, wobei der primäre Haltestift (38) ferner eine nach innen schräg zulaufende Seitenoberfläche (50) aufweist und eine Oberfläche (52) oben auf dieser schräg zulaufenden Seitenoberfläche (50) aufweist, wobei ein Teil dieser Oberfläche (52) geeignet ist, mit der nach innen schräg zulaufenden Wand (32) des oberen Teiles des zweiten axialen Loches (20) in Eingriff zu kommen, um darin reversibel den primären Haltestift (38) unter einem Winkel bezüglich der Achse (B-B) des Teiles (24) mit den Eingriffmitteln des zweiten axialen Loches (20) in der Richtung gegen die Schulter (10) der Ausnehmung (8) in Eingriff zu bringen, wobei der primäre Haltestift (38) geeignet ist, reversibel in dem zweiten axialen Loch (20) des Fräskörpers (6) unter diesem Winkel festgeklemmt zu werden,
**dadurch gekennzeichnet, daß** der primäre Haltestift (38) ein drittes axiales Loch (56) aufweist, welches sich durch mindestens einen Teil des primären Haltestiftes (38) hindurch erstreckt und Mittel in dem dritten axialen Loch (56) um darin reversibel einen sekundären Haltestift (60) festzuklemmen, wobei der sekundäre Haltestift (60) geeignet ist, durch das erste axiale Loch (70) des Schneideinsatzes (14) hindurch und in das dritte axiale Loch (56) in den primären Haltestift (38) eingesetzt zu werden, und Mittel (58) aufweist in Verbindung mit dem dritten axialen Loch (56) für reversibles Festklemmen des sekundären Haltestiftes (60) in diesem und Mittel (62), um Druck gegen den Schneideinsatz (14) in der Richtung der Ausnehmung (8) und der Schulter (10) der Ausnehmung (8) auszuüben.

2. Schneidwerkzeug nach Anspruch 1,
**dadurch gekennzeichnet, daß** der primäre Haltestift (38) von einer ersten Position, in welcher die Längsachse des primären Haltestiftes (38) im wesentlichen parellel zu der Achse (B-B) des Teiles (24) mit den Eingriffmitteln des zweiten axialen Loches (20) ist, zu einer Zweiten Position hin beweglich ist, wobei die Längsachse bezüglich der Achse (B-B) des Teiles (24) mit den Eingriffmitteln des zweiten axialen Loches (20) in Richtung der Schulter (10) der Ausnehmung (8) abgewinkelt ist.

3. Schneidwerkzeug nach Anspruch 1 oder 2,
**dadurch gekennzeichnet, daß** wenn sich der primäre Haltestift (38) in der ersten Position befindet, die Oberfläche (52) oben an der Seitenoberfläche (50) sich in Eingriff mit einer Oberfläche der nach innen schräg zulaufenden Wand (32) fern von der Schulter (10) befindet und daß, wenn der primäre Haltestift (38) in die zweite Position bewegt wird, sich die Oberfläche (52) in Eingriff mit der nach innen schräg zulaufenden Wand (32) an zwei diametral angeordneten Bereichen befindet.

4. Schneideinsatz nach einem der vorhergehenden Ansprüche,
**dadurch gekennzeichnet, daß** das mit Gewinde versehene Bodenende (44) des primären Haltestiftes (38) Mittel aufweist, die mit Antriebsmitteln in Eingriff kommen, wobei das zweite axiale Loch (20) ein Bodenende (28) zur Aufnahme des Antriebsmittels besitzt, wobei das Antriebsmittel in das Bodenende des sekundären Stiftes (20) eingesetzt wird, um dadurch den primären Haltestift (38) in dem zweiten axialen Loch (20) zu befestigen.

5. Schneidwerkzeug nach einem der vorhergenden Ansprüche,
**dadurch gekennzeichnet, daß** das erste axiale Loch (70) mindestens eine V-förmige Nut aufweist und der sekundäre Haltestift (60) einen schräg zulaufenden Kopfabschnitt (62) aufweist, wobei der schräg zulaufende Kopfabschnitt (62) sich In Druckkontakt mit einem Teil der V-förmigen Nuten des Schneideinsatzes (14) am nächsten einer Schulter (10) der Ausnehmung (8) befindet, wenn sich der sekundäre Haltestift (60) im festgeklemmten Eingriff in dem primären Haltestift (38) befindet.

6. Schneidwerkzeug nach einem der vorgehenden Ansprüche,
**dadurch gekennzeichnet, daß** der sekundäre Haltestift (60) einen im wesentlichen zylindrischen Körper (66) aufweist, welcher auf wenigstens einem Teil seiner Außenoberfläche Gewinde (68) aufweist und wobei das dritte axiale Loch (56) eine Form hat, die der Form des zylindrischen Körpers (66) des sekundären Haltestiftes (60) komplementär ist, wobei die Gewinde (68) des sekundären Haltestiftes (60) geeignet sind, sich in festgeklemmtem Eingriff mit den Nuten (58) im dritten axialen Loch (56) zu befinden, wenn der sekundäre Haltestift (60) in das dritte axiale Loch (56) getrieben wird.

7. Schneidwerkzeug nach einem der vorhergehenden Absprüche,
**dadurch gekennzeichnet, daß** ein Einsatzsitz (18) zum Stützen des Schneideinsatzes (14) auf der Basis (12) der Ausnehmung (8) positioniert ist, wobei der Einsatzsitz (18) ein viertes axiales Loch (74) hat, welches mit dem ersten axialen Loch (70) und dem zweiten axialen Loch (20) ausrichtbar ist, und eine Gegenbohrung (76) hat, welche an dem oberen Ende des vierten axialen Loches (74) eine Lagerung beinhaltet, wobei der primäre Haltestift (38) einen Flansch (84) in seinem oberen Teil besitzt, welcher geeignet ist, mit einem Teil (78a) der Lagerung in Richtung der Schulter (10) in Eingriff zu kommen, wenn der primäre Haltestift (38) sich in dem zweiten axialen Loch (20) in festgeklemmtem Eingriff befindet.

## Revendications

1. Outil de coupe comprenant une plaquette de coupe (14) comportant un premier trou axial (70), un corps d'outil (6) comprenant un évidement (8) à une première extrémité comprenant une base (12) et au moins un épaulement (10) relié à la base (12) afin de supporter la plaquette de coupe (14), et un second trou axial (20) pouvant être aligné avec le premier trou axial (70) et se prolongeant à partir de l'évidement (8) dans une partie au moins du corps d'outil (6), ledit second trou axial (20) comprenant une partie supérieure (22) et une partie inférieure comportant une partie de moyens de mise en prise (24), ladite partie supérieure (22) comprenant une paroi taillée conique en direction de l'intérieur (32) se prolongeant à partir de l'évidement (8) formant ainsi une section conique comportant un axe longitudinal (A-A) décalé de l'axe (B-B) de la partie de moyens de mise en prise (24), ladite partie de moyens de mise en prise (24) comprenant une pluralité de rainures (36), et l'extrémité inférieure d'une broche primaire de retenue (38) comprenant une pluralité de filets correspondants (54), dans laquelle le diamètre sur flancs desdits filets (54) est différent du diamètre sur flancs desdites rainures (36), ladite broche primaire de retenue (38) comprenant en outre une surface latérale taillée conique vers l'intérieur (50), et une surface (52) au sommet de ladite surface latérale taillée conique (50), une partie de ladite surface (52) étant adaptée pour venir en contact avec la paroi taillée conique vers l'intérieur (32) de la partie supérieure du second trou axial (20) afin de permettre d'engager dans celle-ci de manière réversible ladite broche primaire de retenue (38) selon un angle par rapport à l'axe (B-B) de la partie comportant les moyens de mise en prise (24) du second trou axial (20) en direction de l'épaulement (10) de l'évidement (8), ladite broche primaire de retenue (38) étant adaptée pour être verrouillée de manière réversible dans le second trou axial (20) du corps d'outil (6) selon ledit angle,
caractérisé en ce que ladite broche primaire de retenue (38) comprend un troisième trou axial (56) se prolongeant à travers une partie au moins de ladite broche primaire de retenue (38) et des moyens dans ledit troisième trou axial (56) pour verrouiller de manière réversible une broche secondaire de retenue (60) dans celle-ci, ladite broche secondaire de retenue (60) étant adaptée pour être insérée à travers le premier trou axial (70) de la plaquette de coupe (14) et dans le troisième trou axial (56) de la broche primaire de retenue (38) et comprenant des moyens (58) en combinaison avec le troisième trou axial (56) pour verrouiller de manière réversible la broche secondaire de retenue (60) dans celle-ci et des moyens (62) pour exercer une pression sur la plaquette de coupe (14) en direction de l'évidement (8) et de l'épaulement (10) de l'évidement (8).

2. Outil de coupe selon la revendication 1, caractérisé en ce que la broche primaire de retenue (38) peut être déplacée d'une première position dans laquelle l'axe longitudinal de la broche primaire de retenue (38) est sensiblement parallèle à l'axe (B-B) de la partie contenant les moyens de mise en prise (24) du second trou axial (20), vers une seconde position dans laquelle ledit axe longitudinal est incliné par rapport à l'axe (B-B) de la partie contenant les moyens de mise en prise (24) du second trou axial (20) en direction de l'épaulement (10) de l'évidement (8).

3. Outil de coupe selon la revendication 1 ou 2, caractérisé en ce que lorsque ladite broche primaire de retenue (38) est dans la première position la surface (52), au sommet de la surface latérale (50), est en prise avec une surface de la paroi taillée conique vers l'intérieur (32) distante de l'épaulement (10) et lorsque ladite broche primaire de retenue (38) est déplacée vers la seconde position la surface (52) est en prise avec la paroi taillée conique vers l'intérieur (32) au niveau de deux zones situées diamétralement.

4. Outil de coupe selon l'une quelconque des revendications précédentes, caractérisé en ce que l'extrémité inférieure filetée (44) de la broche primaire de retenue (38) comprend des moyens de réception d'un moyen d'entraînement, le second trou axial (20) comportant une extrémité inférieure (28) afin de recevoir le moyen d'entraînement, dans laquelle le moyen d'entraînement est inséré dans l'extrémité inférieure de la broche secondaire (38) afin de fixer ainsi la broche primaire de retenue (38) à l'intérieur du second trou axial (20).

5. Outil de coupe selon l'une quelconque des revendications précédentes, caractérisé en ce que le premier trou axial (70) comprend au moins une rainure en forme de V et la broche secondaire de retenue (60) comprend une partie de tête taillée conique (62), ladite partie de tête taillée conique (62) étant en contact de pression avec une partie des rainures en forme de V de la plaquette de coupe (14) la plus proche d'un épaulement (10) de l'évidement (8) lorsque la broche secondaire de retenue (60) est en prise de verrouillage à l'intérieur de la broche primaire de retenue (38).

6. Outil de coupe selon l'une quelconque des revendications précédentes, caractérisé en ce que la broche secondaire de retenue (60) comprend un corps sensiblement cylindrique (66) comportant des filets (68) sur une partie au moins de sa surface extérieure et le troisième trou axial (56) comportant une forme complémentaire de la forme du corps cylindrique (66) de la broche secondaire de retenue (60), dans lequel les filets (68) de la broche secondaire de retenue (60) sont adaptés pour être en prise de verrouillage avec les rainures (58) du troisième trou axial (56) lorsque la broche secondaire de retenue (60) est engagée dans le troisième trou axial (56).

7. Outil de coupe selon l'une quelconque des revendications précédentes, caractérisé en ce qu'un siège de plaquette (18) destiné à supporter la plaquette de coupe (14) est positionné sur la base (12) de l'évidement (8), ledit siège de plaquette (18) comportant un quatrième trou axial (74) pouvant être aligné avec les premier (70) et second (20) trous axiaux et un contre-alésage (76) comportant un rebord à l'extrémité supérieure du quatrième trou axial (74), ladite broche primaire de retenue (38) comportant une collerette (84) dans sa partie supérieure adaptée pour se mettre en prise avec une partie (78a) du rebord en direction de l'épaulement (10) lorsque la broche primaire de retenue (38) est en prise de verrouillage à l'intérieur du second trou axial (20).
